# FASCICULE DE BREVET EUROPEEN

(11) **EP 3 585 677 B1**
(45) Date de publication et mention de la délivrance du brevet: **07.04.2021**
(21) Numéro de dépôt: 18704902.8
(22) Date de dépôt: 30.01.2018
(51) Int. Cl.: B62D 25/20, B62D 63/02

(54) **STRUCTURE DE SOUBASSEMENT DE VÉHICULE AUTOMOBILE**
UNTERBAU EINES KRAFTFAHRZEUGKAROSSERIE
MOTOR VEHICLE BODY UNDERSTRUCTURE

(43) Date de publication de la demande: 01.01.2020
(73) Titulaire: Renault s.a.s, 92100 Boulogne-Billancourt (FR)
(72) Inventeur: BLONDEAU, Fabien, 78150 Le Chesnay (FR); JARRY, Frederic, 92350 Le Plessis Robinson (FR); KLEIN, Pascal, 60180 Nogent sur Oise (FR); GRITTI, Antony, 75015 Paris (FR)
(86) Numéro de dépôt international: PCT/EP2018/052288
(87) Numéro de publication internationale: WO 2018/153623

(56) Documents cités:
- EP-A1- 2 749 479
- DE-A1-102015 016 954
- US-A- 4 557 519

## Description

L'invention concerne un soubassement de véhicule automobile, un véhicule comportant un tel soubassement et une gamme d'au moins deux véhicules différents ainsi équipés.

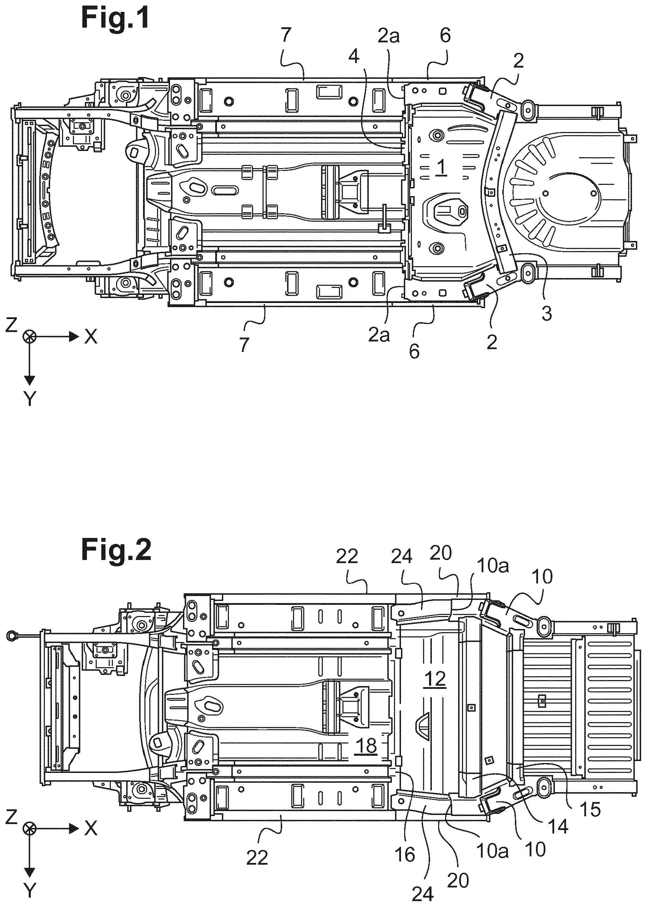

Le soubassement d'un véhicule automobile, également appelée « structure sous caisse » est la partie portante inférieure de la carrosserie du véhicule et comprend classiquement trois planchers, respectivement avant, central et arrière, qui s'étendent sensiblement suivant la direction longitudinale du véhicule, de l'avant vers l'arrière. En référence à la figure 1, qui représente une vue générale de dessous d'un soubassement de véhicule automobile connu, le plancher arrière 1 est classiquement fixé sur deux longerons arrière longitudinaux 2, qui s'étendent sensiblement selon la direction longitudinale du véhicule et qui s'écartent l'un de l'autre vers l'extérieur du véhicule. Ces longerons arrière 2 sont fixés à au moins une traverse centrale 3, qui s'étend sensiblement transversalement au véhicule. Dans certains types de véhicules, le bord avant du plancher arrière est relié à une paroi en tôle 4 appelée pare-close s'étendant dans un plan sensiblement vertical et transversal par rapport aux deux longerons arrière 2. Cette paroi en tôle 4 (pare-close) est située à la limite entre le plancher central 5 et le plancher arrière 1. Aussi, le plancher central 5 est situé immédiatement dans le prolongement de la pare-close 4 et s'étend vers l'avant du véhicule. L'extrémité avant 2a des longerons 2 est fixée à la paroi en tôle constituant la pare-close. Par ailleurs, de chaque côté du soubassement, sont disposés des éléments de fermeture longitudinaux, ou élément de fermeture de bavolet, comportant un élément de fermeture de bavolet arrière 6 et un élément de fermeture de bavolet avant 7, qui s'étendent respectivement longitudinalement par rapport aux longerons arrière 2 et au plancher central 5, dans des plans perpendiculaires au plancher
Le document US 4 557 519 A décrit un soubassement de véhicule automobile selon le préambule de la revendication 1.

Suivant le type de véhicule à réaliser et en particulier suivant la largeur de véhicule, le soubassement du véhicule doit pouvoir être adapté pour pouvoir se présenter dans une version plus ou moins large. Par exemple, pour une gamme de véhicules visant à couvrir différents types de véhicules parmi lesquels au moins un premier type de véhicule dit large et un deuxième type de véhicule dit étroit, il est nécessaire de dimensionner différentes largeurs de plancher arrière. Or, dans les solutions actuelles, la modification de la largeur du plancher arrière implique la modification de la largeur du plancher central, ce que l'on cherche à éviter sur une même ligne d'assemblage du véhicule en usine. Autrement dit, l'agencement de soubassement du véhicule est spécifique à un type de véhicule et, en particulier, est défini par la largeur du plancher arrière, et il faut prévoir autant de types d'agencement de soubassement qu'il y a de types de véhicules présentant une diversité de plancher arrière, notamment en largeur. Autrement dit encore, la nécessité d'avoir à modifier le plancher central du soubassement du véhicule pour pouvoir gérer des diversités de plancher arrière pour une même gamme de véhicules, ne permet pas de réaliser différents types de véhicule d'une même gamme, en particulier de type large et étroit, sur une même ligne d'assemblage de véhicule en usine.

Aussi, il existe un besoin pour un soubassement de véhicule automobile qui pallie ces inconvénients et qui permette de proposer une standardisation au moins partielle de l'agencement du soubassement sur plusieurs véhicules d'une même gamme, en particulier pour un véhicule de type étroit et un véhicule de type large d'une même gamme.

A cet effet, l'invention propose un soubassement de véhicule automobile comprenant deux longerons arrière espacés l'un de l'autre, orientés sensiblement selon la direction longitudinale du véhicule et présentant chacun une première extrémité, au moins une traverse s'étendant entre lesdits longerons arrière dans la direction transversale dudit véhicule, un plancher arrière fixé sur lesdits longerons arrière et séparé d'un plancher central par une paroi en tôle s'étendant dans un plan sensiblement vertical et transversal par rapport aux dits longerons arrière au droit desdites premières extrémités et, de chaque côté dudit soubassement, un élément de fermeture de bavolet arrière et un élément de fermeture de bavolet avant s'étendant longitudinalement et dans un plan sensiblement perpendiculaire auxdits plancher arrière et central, caractérisé en ce que ladite première extrémité de chacun desdits longerons arrière est prolongée par un module de liaison adaptatif, qui est apte à être fixée à ladite première extrémité de chaque longeron et à ladite paroi en tôle pour constituer une partie de liaison entre ladite première extrémité de chaque longeron arrière et ladite paroi en tôle, et en ce que ledit module de liaison adaptatif est conçu pour adapter ladite partie de liaison à une pluralité de dimensionnements dudit plancher arrière selon au moins les directions longitudinale et/ou transversale du véhicule, sans modification du dimensionnement dudit plancher central.

Avantageusement, ledit module de liaison adaptatif est adaptable en longueur en vue d'adapter la longueur de ladite partie de liaison.

De préférence, le soubassement comprend deux traverses fixées transversalement entre lesdits longerons, notamment une traverse de fixation d'une assise de rang 2 du véhicule.

L'invention concerne également un véhicule automobile caractérisé en ce qu'il comporte un soubassement tel que décrit ci-dessus.

L'invention concerne encore une gamme de véhicules constituée d'au moins deux véhicules différents selon l'invention, caractérisée par un premier type de véhicule à plancher arrière large et un deuxième type de véhicule à plancher arrière étroit, et en ce que au moins le plancher central, l'élément de fermeture de bavolet avant et les longerons arrières sont identiques et communs pour les deux types de véhicule et en ce que au moins le module de liaison adaptatif et l'élément de fermeture de bavolet arrière sont différents et spécifiques pour les deux types de véhicule.

De préférence, les deux types de véhicule présentent un écart de largeur supérieur ou égale à 30 mm de chaque côté du soubassement et préférentiellement égal à 50 mm.

De préférence, le plancher arrière du premier type de véhicule présente une largeur de 1700 mm et le plancher arrière du deuxième type de véhicule présente une largeur de 1600 mm.

D'autres caractéristiques et avantages de l'invention ressortiront clairement de la description qui en est faite ci-après, à titre indicatif et nullement limitatif, en référence aux dessins annexés, dans lesquels :
- la figure 1 représente une vue générale de dessous d'un soubassement classique de véhicule automobile, et a déjà été décrite ;
- la figure 2 représente une vue générale de dessous du soubassement de l'invention ;
- la figure 3 représente une vue partielle de dessous du soubassement de l'invention, pour un premier type de véhicule automobile, dit véhicule large, présentant une largeur de plancher arrière maximale ;
- la figure 4 représente une vue partielle de dessous du soubassement de l'invention pour un deuxième type de véhicule automobile, dit véhicule étroit, présentant une largeur de plancher arrière minimale.

Ces figures sont représentées selon des directions et orientations définies en référence à un repère orthogonal XZY, dans lequel l'axe X est la direction longitudinale, d'avant en arrière, du véhicule, dirigée vers l'arrière, l'axe Y est la direction transversale du véhicule, dirigée vers la droite, et l'axe Z est la direction verticale du véhicule, dirigée vers le haut. Dans la suite de la description, les termes « longitudinal », « transversal », « vertical », « haut », « bas », « avant », « arrière » sont définis par rapport à ce repère.

En référence à la figure 2, le soubassement de l'invention comprend deux longerons arrière 10, en tôle emboutie, qui s'étendent longitudinalement au véhicule et s'écartent l'un de l'autre vers l'extérieur du véhicule, dans la direction de l'avant de celui-ci. Ces deux longerons arrière 10 sont fixés sous un plancher arrière 12 du véhicule, qui s'étend entre les deux longerons sur toute la longueur des longerons. Une première traverse de fixation 14 d'une assise de rang 2 du véhicule s'étend transversalement au véhicule entre les deux longerons arrière 10 et est fixée par ses extrémités respectives aux deux longerons 10, sensiblement à proximité des extrémités avant 10a des longerons arrière 10. Le plancher arrière 12 est fixé à la face supérieure de cette traverse 14, soit la face de cette dernière orientée vers le dessus du véhicule. Le soubassement comporte encore préférentiellement une deuxième traverse 15, dite traverse de rippage, fixée entre les deux longerons 10 en arrière de la première traverse. Le plancher arrière 12 est délimité vers l'avant du véhicule par une paroi en tôle 16 constituant la pare-close, qui s'étend dans un plan sensiblement vertical et transversal par rapport aux deux longerons arrière 10. Immédiatement à l'avant de cette pare-close 14, est fixé un plancher central 18, qui s'étend dans un plan X-Y du véhicule.

Conformément à l'invention, l'extrémité avant 10a des longerons 10 n'est pas fixé directement à la pare-close 16 comme dans l'agencement de soubassement connu décrit en référence à la figure 1, mais est prolongée par un module de liaison adaptatif 24, qui est apte à être fixée d'une part, à l'extrémité avant 10a de chaque longeron 10 et, d'autre part, à la pare-close 16, ou à un élément de renfort de celle-ci, pour constituer une partie de liaison s'étendant longitudinalement entre les extrémités avant 10a de chaque longeron arrière 10 et la pare-close 16. Le module de liaison adaptatif 24 est prévu pour adapter la partie de liaison entre les longerons arrière 10 et la pare-close 16 à une pluralité de dimensionnements du plancher arrière 12 selon au moins les directions longitudinale et/ou transversale du véhicule et ce, sans modification du dimensionnement du plancher central 18. Le module de liaison adaptatif 24 est préférentiellement constitué d'une pièce de tôle emboutie en forme d'équerre formée d'une première et d'une deuxième ailes sensiblement perpendiculaires l'une à l'autre, la première aile s'étendant dans le prolongement de la face inférieure du longeron 10, soit la face de ce dernier orientée vers le dessous du véhicule et la deuxième aile s'étendant, di côté intérieur du soubassement, entre la première aile et la face inférieure du plancher arrière, soit la face de ce dernier orientée vers le dessous du véhicule.

Le module de liaison adaptatif 24 est conçu pour permettre de gérer divers dimensionnements du plancher arrière, en termes de largeur notamment, en permettant d'adapter la partie de liaison entre les longerons arrière et la pare-close à un dimensionnement donné de plancher arrière et ce, tout en conservant une même forme de longeron arrière et un même dimensionnement de plancher central dans l'ensemble des directions, quel que soit le dimensionnement, en particulier de largeur, du plancher arrière. En effet, l'interface de liaison entre les longerons arrière et la pare-close est assurée par le module de liaison adaptatif et non plus directement au niveau du longeron, de sorte que la forme de ce dernier peut être conservée pour une diversité de dimensionnements du plancher arrière, avec prise en compte de cette diversité de dimensionnements au niveau de la partie de liaison constituée par le module de liaison adaptatif. Le module de liaison adaptatif constitue donc une pièce distincte et séparée du longeron arrière, fixée entre l'extrémité avant du longeron et la pare-close, permettant d'adapter la partie de liaison entre ces deux derniers éléments pour différents types de véhicule présentant des largeurs de plancher arrière différentes.

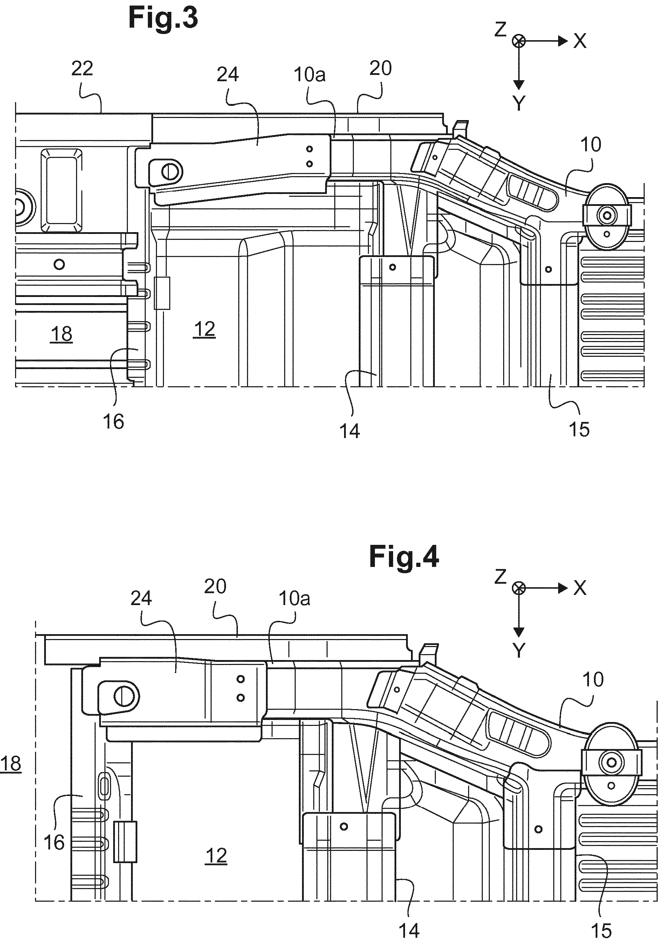

Le module de liaison adaptatif 24 permet ainsi de prévoir une gamme d'au moins deux types de véhicule, dont un premier type à plancher arrière large et un deuxième type à plancher arrière étroit, qui partagent un maximum d'éléments de soubassement communs et, en particulier, le plancher central et les longerons arrière. Les figures 3 et 4 illustrent l'agencement de soubassement commun à la gamme de véhicule respectivement pour le premier type de véhicule correspondant à la version large du plancher arrière et pour le deuxième type de véhicule correspondant à la version étroite du plancher arrière. Suivant un exemple de réalisation, le plancher arrière du premier type de véhicule présente une largeur de 1700 mm et le plancher arrière du deuxième type de véhicule présente une largeur de 1600 mm. Autrement dit, suivant cet exemple, les deux types de véhicule présentent un écart de largeur sensiblement égal à 50 mm de chaque côté du soubassement. L'espacement entre les deux longerons arrière 10 est donc adapté en conséquence et on prévoira des traverses plus courtes pour la version étroite.

On précise que le véhicule large permet en outre d'avoir une longueur supérieure à celle du véhicule étroit. Cette longueur supérieure permet typiquement d'accueillir une assise de rang 3 du véhicule. La différence de longueur se matérialise dans ce cas par une différence d'empattement entre les deux types de véhicule.

Le passage du soubassement avec plancher arrière large (figure 3) au soubassement avec plancher arrière étroit (figure 4) et partant, l'adaptation de l'empattement du véhicule, est obtenu, comme illustré aux figures 3 et 4, au moyen d'une réduction de la longueur du module de liaison adaptatif 24 constituant la partie de liaison entre l'extrémité avant 10a des longerons 10 et la pare-close 16. Ce faisant, le plancher central 18, délimité à l'arrière par la pare-close 16, ainsi que les longerons arrière 10 restent identiques pour les deux types de véhicule respectivement à plancher arrière large et plancher arrière étroit. Le module de liaison adaptatif 24 permet donc de garder le plancher central 18 et les longerons arrière 10 identiques quelle que soit la largeur du plancher arrière du véhicule.

De chaque côté du soubassement sont disposés des éléments de fermeture longitudinaux, comportant un élément de fermeture de bavolet arrière 20 et un élément de fermeture de bavolet avant 22. L'élément de fermeture de bavolet avant 22 s'étend longitudinalement au plancher central 18 dans un plan sensiblement perpendiculaire à celui-ci, et est donc prévu, tout comme le plancher central 18, pour être commun aux deux types de véhicule, respectivement large et étroit. Par contre, l'élément de fermeture de bavolet arrière 20, qui s'étend le long d'une portion des longerons arrière 10 et du module de liaison adaptatif 24, est spécifique pour chaque type de véhicule et est plus particulièrement adapté à la différence de longueur entre chaque type de véhicule.

L'invention permet donc de prévoir un maximum d'éléments de soubassement qui sont communs aux deux types de véhicules, respectivement large et étroit, dont le plancher central, les longerons arrière, les éléments de fermeture de bavolet avant, tandis que des éléments du soubassement sont spécifiques pour chacun des deux types de véhicule dont le module de liaison adaptatif, les éléments de fermeture de bavolet arrière et les traverses s'étendant entre les longerons arrière.

## Revendications

1. Soubassement de véhicule automobile comprenant deux longerons arrière (10) espacés l'un de l'autre, orientés sensiblement selon la direction longitudinale du véhicule et présentant chacun une première extrémité (10a), au moins une traverse (14) s'étendant entre lesdits longerons arrière (10) dans la direction transversale dudit véhicule, un plancher arrière (12) fixé sur lesdits longerons arrière et séparé d'un plancher central (18) par une paroi en tôle (16) s'étendant dans un plan sensiblement vertical et transversal par rapport aux dits longerons arrière au droit desdites premières extrémités et, de chaque côté dudit soubassement, un élément de fermeture de bavolet arrière (20) et un élément de fermeture de bavolet avant (22) s'étendant longitudinalement et dans un plan sensiblement perpendiculaire auxdits planchers arrière et central, **caractérisé en ce que** ladite première extrémité (10a) de chacun desdits longerons arrière (10) est prolongée par un module de liaison adaptatif (24), qui est apte à être fixée à ladite première extrémité (10a) de chaque longeron arrière et à ladite paroi en tôle (16) pour constituer une partie de liaison entre ladite première extrémité de chaque longeron arrière et ladite paroi en tôle, et **en ce que** ledit module de liaison adaptatif est conçu pour adapter ladite partie de liaison à une pluralité de dimensionnements dudit plancher arrière (12) selon au moins les directions longitudinale et/ou transversale du véhicule, sans modification du dimensionnement dudit plancher central (18).

2. Soubassement selon la revendication 1, **caractérisé en ce que** ledit module de liaison adaptatif (24) est adaptable en longueur en vue d'adapter la longueur de ladite partie de liaison.

3. Soubassement selon la revendication 1 ou 2, **caractérisé en ce qu'**il comprend deux traverses (14, 15) fixées transversalement entre lesdits longerons, notamment une traverse de fixation d'une assise de rang 2 du véhicule.

4. Véhicule automobile **caractérisé en ce qu'**il comporte un soubassement selon l'une quelconque des revendications précédentes.

5. Gamme de véhicules constituée d'au moins deux véhicules différents selon la revendication 4, **caractérisée par** un premier type de véhicule à plancher arrière large et un deuxième type de véhicule à plancher arrière étroit, et en ce que au moins le plancher central (18), l'élément de fermeture de bavolet avant (22) et les longerons arrières (10) sont identiques et communs pour les deux types de véhicule et en ce que au moins le module de liaison adaptatif (24) et l'élément de fermeture de bavolet arrière (22) sont différents et spécifiques pour les deux types de véhicule.

6. Gamme de véhicules selon la revendication 5, **caractérisée en ce que** les deux types de véhicule présentent un écart de largeur supérieur ou égale à 30 mm de chaque côté du soubassement et préférentiellement égal à 50 mm.

7. Gamme de véhicule selon la revendication 5 ou 6, **caractérisé en ce que** le plancher arrière du premier type de véhicule présente une largeur de 1700 mm et le plancher arrière du deuxième type de véhicule présente une largeur de 1600 mm.

## Patentansprüche

1. Unterboden eines Kraftfahrzeugs, umfassend zwei hintere Längsträger (10), die voneinander beabstandet sind, im Wesentlichen in der Längsrichtung des Fahrzeugs ausgerichtet sind und jeweils ein erstes Ende (10a) aufweisen, wenigstens einen Querträger (14), der sich zwischen den hinteren Längsträgern (10) in der Querrichtung des Fahrzeugs erstreckt, ein hinteres Bodenblech (12), das an den hinteren Längsträgern befestigt ist und von einem mittleren Bodenblech (18) durch eine Blechwand (16) getrennt ist, die sich in einer im Wesentlichen vertikalen und quer in Bezug auf die hinteren Längsträger verlaufenden Ebene direkt bei den ersten Enden erstreckt, und, auf jeder Seite des Unterbodens, ein hinteres Schweller-Verschlusselement (20) und ein vorderes Schweller-Verschlusselement (22), die sich in Längsrichtung und in einer zum hinteren und zum mittleren Bodenblech im Wesentlichen senkrechten Ebene erstrecken, **dadurch gekennzeichnet, dass** das erste Ende (10a) jedes der hinteren Längsträger (10) durch ein adaptives Verbindungsmodul (24) verlängert ist, welches am ersten Ende (10a) jedes hinteren Längsträgers und an der Blechwand (16) befestigbar ist, um einen Verbindungsteil zwischen dem ersten Ende jedes hinteren Längsträgers und der Blechwand zu bilden, und dadurch, dass das adaptive Verbindungsmodul dafür ausgelegt ist, den Verbindungsteil an mehrere Bemessungen des hinteren Bodenbleches (12) in wenigstens der Längs- und/oder Querrichtung des Fahrzeugs ohne Änderung der Bemessung des mittleren Bodenbleches (18) anzupassen.

2. Unterboden nach Anspruch 1, **dadurch gekennzeichnet, dass** das adaptive Verbindungsmodul (24) in der Länge anpassbar ist, zwecks Anpassung der Länge des Verbindungsteils.

3. Unterboden nach Anspruch 1 oder 2, **dadurch gekennzeichnet, dass** er zwei Querträger (14, 15) umfasst, die quer zwischen den Längsträgern befestigt sind, insbesondere einen Querträger zur Befestigung eines Sitzes der Reihe 2 des Fahrzeugs.

4. Kraftfahrzeug, **dadurch gekennzeichnet, dass** es einen Unterboden nach einem der vorhergehenden Ansprüche aufweist.

5. Fahrzeugmodellreihe, welche aus wenigstens zwei verschiedenen Fahrzeugen nach Anspruch 4 besteht, **gekennzeichnet durch** einen ersten Fahrzeugtyp mit breitem hinterem Bodenblech und einen zweiten Fahrzeugtyp mit schmalem hinterem Bodenblech, und **dadurch, dass** wenigstens das mittlere Bodenblech (18), das vordere Schweller-Verschlusselement (22) und die hinteren Längsträger (10) identisch und den zwei Fahrzeugtypen gemeinsam sind, und **dadurch, dass** das adaptive Verbindungsmodul (24) und das hintere Schweller-Verschlusselement (22) verschieden und für die zwei Fahrzeugtypen spezifisch sind.

6. Fahrzeugmodellreihe nach Anspruch 5, **dadurch gekennzeichnet, dass** die zwei Fahrzeugtypen eine Breitenabweichung, die größer oder gleich 30 mm auf jeder Seite des Unterbodens und vorzugsweise gleich 50 mm ist, aufweisen.

7. Fahrzeugmodellreihe nach Anspruch 5 oder 6, **dadurch gekennzeichnet, dass** das hintere Bodenblech des ersten Fahrzeugtyps eine Breite von 1700 mm aufweist und das hintere Bodenblech des zweiten Fahrzeugtyps eine Breite von 1600 mm aufweist.

## Claims

1. Motor vehicle body understructure comprising two rear chassis frame side rails (10) spaced apart from one another and oriented substantially in the longitudinal direction of the vehicle, each having a first end (10a), at least one cross member (14) extending between said rear chassis frame side rails (10) in the transverse direction of said vehicle, a rear floor pan (12) attached to said rear chassis frame side rails and separated from a central floor pan (18) by a sheet metal wall (16) extending in a plane that is substantially vertical and transverse to said rear chassis frame side rails in line with said first ends and, on each side of said understructure, a rear skirt closure element (20) and a front skirt closure element (22) extending longitudinally and in a plane substantially perpendicular to said rear and central floor pans, **characterized in that** said first end (10a) of each of said rear chassis frame side rails (10) is extended by an adaptive connecting module (24), which is designed to be attached to said first end (10a) of each rear chassis frame side rail and to said sheet metal wall (16) to form a connecting part between said first end of each rear chassis frame side rail and said sheet metal wall, and **in that** said adaptive connecting module is designed to adapt said connecting part to a plurality of sizes of said rear floor pan (12), at least in the longitudinal and/or transverse directions of the vehicle, without changing the size of said central floor pan (18).

2. Understructure according to Claim 1, **characterized in that** the length of said adaptive connecting module (24) can be adjusted to adjust the length of said connecting part.

3. Understructure according to Claim 1 or 2, **characterized in that** it includes two cross members (14, 15) attached transversely between said chassis frame side rails, notably a cross member for fastening a second-row seat of the vehicle.

4. Motor vehicle **characterized in that** it includes an understructure according to any one of the preceding claims.

5. Range of vehicles made up of at least two different vehicles according to Claim 4, **characterized by** a first vehicle type with a wide rear floor pan and a second vehicle type with a narrow rear floor pan, and in that at least the central floor pan (18), the front skirt closure element (22) and the rear chassis frame side rails (10) are identical and common to both vehicle types, and in that at least the adaptive connecting module (24) and the rear skirt closure element (22) are different and specific for the two vehicle types.

6. Vehicle range according to Claim 5, **characterized in that** the two vehicle types have a width difference equal to or greater than 30 mm on each side of the understructure, and preferably equal to 50 mm.

7. Vehicle range according to Claim 5 or 6, **characterized in that** the rear floor pan of the first vehicle type has a width of 1700 mm and the rear floor pan of the second vehicle type has a width of 1600 mm.
